# EUROPEAN PATENT APPLICATION

(11) **EP 4 183 647 A1**
(43) Date of publication of application: **24.05.2023**
(21) Application number: 21209983.2
(22) Date of filing: 23.11.2021
(51) Int. Cl.: B60T 17/08

(54) **BRAKE ACTUATOR, VEHICLE, METHOD OF ASSEMBLING A BRAKE ACTUATOR**

(71) Applicant: ZF CV Systems Europe BV, 1170 Brussels (BE)
(72) Inventor: GAWLIK, Rafal, 51-315 Wrolaw (PL); ZYGADLO, Krzysztof, 58-212 Jazwina (PL)
(74) Representative: Ohlendorf, Henrike

(57) **Abstract**

The invention relates to a brake actuator (100) for a vehicle (1002), in particular a commercial vehicle (1002), wherein the brake actuator (100) comprises a service brake section (120) comprising a service brake housing (122) with a service brake non-pressure chamber (124), a further section (140), comprising at least one further housing (142) with a service brake pressure chamber (141), and a diaphragm (160), arranged and adapted to hermetically close the service brake pressure chamber (141).

According to the invention, it is proposed that the service brake housing (122) comprises a service flange collar (126), and the at least one further housing (142) comprises a further flange collar (146), wherein the service flange collar (126) is mounted to the further flange collar (146) by a screw flange connection (180) with a plurality of bolts (184), such that the diaphragm (160) is held in between the service brake housing (122) and the at least one further housing (142).

## Description

The invention refers in a first aspect to a brake actuator according to the preamble of claim 1. The invention further refers in a second aspect to a vehicle and in a third aspect to a method of assembling a brake actuator.

Brake cylinders or brake actuators for vehicles, in particular pneumatic brake actuators, are generally known.

US 2007/0028761 A1 discloses a spring-actuated air-brake cylinder as a diaphragm cylinder for vehicle brake systems which includes a diaphragm, an actuator-spring chamber in which there is received a spring-actuated piston, which is acted on by a compression spring as the actuator spring and is actively connected to the diaphragm, which is disposed between the actuator-spring chamber and a pressure chamber. In brake actuator disclosed in US 2007/0028761 A1, the diaphragm is attached sealingly in a circumferentially clamped manner to the actuator housing.

In such clamping connection, i.e. fixation, of the diaphragm, the diaphragm is clamped in between two housing parts of the actuator housing by means of a clamping ring. Such clamping ring connection type, albeit its advantages regarding cost efficiency, is still problematic with regard to reliability and to a straightforward assembly. In particular, the connection by means of a clamping ring is relatively sensitive to geometric deviations of the clamping ring and/or the housing and/or the diaphragm. For example, as a result of an improper contact or a geometric deviation of the diaphragm and/or the actuator housing and/or the clamping ring, a leakage or even a pullout of the diaphragm can occur.

It is therefore desirable to address at least one of the above problems. Brake actuators should be improved, in particular with respect to their reliability and a straightforward assembly.

This is where the invention comes in, with the object to provide an improved brake actuator, in particular with respect to reliability and a straightforward assembly.

In accordance with the invention the object is solved in a first aspect by a brake actuator as proposed according to claim 1.

A brake actuator for a vehicle is proposed, in particular a commercial vehicle, wherein the brake actuator comprises a service brake section comprising a service brake section comprising a service brake housing with a service brake non-pressure chamber, a further section, comprising at least one further housing with a service brake pressure chamber, and a diaphragm, arranged and adapted to hermetically close the service brake pressure chamber.

According to the invention, it is proposed that the service brake housing comprises a service flange collar, and the further housing comprises a further flange collar, wherein the service flange collar is mounted to the further flange collar by a screw flange connection with a plurality of bolts, such that the diaphragm is held in between the service brake housing and the at least one further housing.

The invention is based on the finding that the fixation of the diaphragm in a brake cylinder can be improved with respect to the conventional clamping ring approach. By providing a service flange collar as a flange-shaped circumferential protrusion of the service brake housing and a further flange collar as a flange-shaped circumferential protrusion of the at least one further housing, a sufficient mounting surface arranged in, or parallel to, a mounting plane is provided for receiving the plurality of bolts. By fastening the plurality of bolts, a screw flange connection can be established. Preferably, the mounting plane is substantially parallel to the diaphragm and/or substantially perpendicular to an actuation direction of the brake actuator. The screw flange connection is adapted to provide an axial clamping force for fixing the service brake housing and the at least one further housing together, and further for holding, preferably clamping, the diaphragm in between.

According to the invention, it was specifically recognized the connection according to the concept of the invention in particular can enable a better establishing of clamping forces as the at least one bolt is approximately arranged in the direction of the clamping force. Therefore, the clamping force can be established with greater ease and precision, in particular compared to prior art approaches such as a clamping ring. In particular, the clamping force can be adjusted precisely, in particular by a controlled fastening of the bolts.

Advantageously, all housing components of the brake actuator, in particular the service brake housing and the at least one further housing, can be fixed together by a singular screw flange connection, further causing a fixation of the diaphragm.

In the context of this invention, a bolt is considered a threaded fixation element with an elongated shape, such as a screw, threaded pin or the like. By virtue of such thread, the bolt can be engaged with a corresponding counterpart, such as a nut, for fastening the screw flange connection and applying a clamping force. A brake actuator in the context of this invention includes a pneumatic brake actuator, i.e. a pneumatic brake cylinder.

Further developments of the invention can be found in the dependent claims and show particularly advantageous possibilities to realize above described concept in light of the object of the invention and regarding further advantages.

Preferably, the diaphragm is clamped, i.e. the diaphragm is held in between the service brake housing and the at least one further housing by a clamping force generated by the screw flange connection.

In accordance with a preferred development of the invention, it is proposed that at least one bolt comprises a thread, adapted to engage with at least one nut. Preferably, the thread is an outer thread. In other words, the bolt can be configured as a screw with an outer thread extending at least partly over its lateral surface. Preferably, the bolt comprises a bolt head with a suitable shape, such as an inner or outer hexagonal shape, for applying a rotating movement for assembly and/or disassembly. Such developments with a threaded bolt have the advantage of a non-destructible, releasable connection of the diaphragm. Further, it provides a cost-effective connection, as it is mainly based on standard parts and does not require special tools for assembly or disassembly.

In accordance with a further preferred development, the further housing is a spring brake housing, encasing a non-pressure chamber and/or a spring brake chamber, in particular forming a housing for a combined brake actuator with a service brake function and a spring brake function. In other embodiments, the further housing can be any other part or structure, such as a lid or a mounting component of the brake system or of the vehicle, and can serve to encase the service brake pressure chamber and/or to fix the brake actuator in its position.

In accordance with a further preferred development, it is proposed that the further section comprises a first further housing and a second further housing, wherein the first further housing comprises a first further flange collar, and preferably the second further housing comprises a second further flange collar. Preferably, the first further flange collar and/or the second further flange collar are mounted to the service flange collar by the screw flange connection. Advantageously, all housing components, in particular three housing components, are held together by the screw flange connection.

Preferably, at least the outer housings with respect to an axial, actuation direction of the brake actuator, in particular the first further housing and the service brake housing, are held together by the screw flange connection via their respective flange collars, in particular the first further flange collar and the service brake flange collar. This means in particular that the clamping force generated by the screw flange connection is introduced into the two outer housings via their respective flange collars, thereby generating a compression that holds together the other remaining components, in particular the intermediate housings such as the second further housing and the diaphragm.

In accordance with a further preferred development, it is proposed that the first further housing is a spring brake housing, encasing a spring brake chamber and/or the second further housing is a diaphragm support portion, wherein the diaphragm is held in between the service brake housing and the diaphragm support portion. In particular, the diaphragm support portion is adapted to hermetically encase the service brake pressure chamber together with the diaphragm. In particular, in such development, the brake actuator is configured as a combined brake actuator with a service brake function and a spring brake function.

In accordance with a preferred development, it is proposed that the further housing, preferably the diaphragm support portion, comprises a circular diaphragm support rim protruding axially towards the service brake housing, adapted to press the diaphragm against the service brake housing with an annular clamping area. The circular diaphragm support rim advantageously provides a means for applying a clamping force to the diaphragm. Thereby, the function of generating the clamping force and the function of applying the clamping force to the diaphragm are separated in different parts of the further housing. In particular, a conventional diaphragm, in particular with a support bead can be used, as the circular diaphragm support rim resembles a circular protrusion used in prior art brake actuators. By using a diaphragm with a support bead, a positive locking, in particular elastic positive locking, between the further housing, the diaphragm and the service brake housing can be established.

In accordance with a preferred development, it is proposed that the screw flange connection comprises a plurality of nuts for each bolt, preferably a first nut, a second nut and a third nut, wherein the nuts are adapted to engage with the bolt. Preferably, the first nut is adapted to fix the first further flange collar to the second further flange collar, in particular between a bolt head of the bolt and the first nut, and the service flange collar is held in between the second nut and the third nut. In other developments, also a reversed axial sequence of said flange collars is possible, in particular such that the first further flange collar and the second further flange collar are fixed to each other by, and held in between, the third nut and the second nut, and the service flange collar is held in between the first nut and the bolt head. In such developments with a plurality of nuts for each bolt, at least one flange collar can be fixed, and in particular spaced with respect to at least one other flange collar, in a defined and straightforward manner. In particular, the service flange collar can be spaced apart in a clearance gap from the first further flange collar and the second further flange collar by being held in between the second and third nut, in a defined distance from the first nut. In such developments with a plurality of nuts for each bolt, it is possible to disassemble e.g. the spring brake housing independently from the at least one further housing.

In other developments, the screw flange connection comprises one nut for each bolt. In such developments, the outer housings with respect to an axial, actuation direction of the brake actuator, in particular the first further housing and the service brake housing, are held together by the screw flange connection via their respective flange collars, in particular the first further flange collar and the service brake flange collar.

Preferably, it is suggested that the screw flange connection comprises a number of at least two bolts, preferably four bolts, more preferably eight bolts. If there are more bolts, such as six, eight, or twelve, a more even distribution of the clamping force can be achieved. If there are less bolts, such as two or four, a quicker assembly and/or a disassembly can be achieved. Preferably, each nut comprises an inner thread, adapted to engage with an outer thread of the bolt.

Preferably, it is suggested that the at least two bolts are arranged circumferentially around the further flange collar, wherein preferably each bolt is equally distanced from its circumferentially neighboring bolt. In other words, all bolts are equally spaced apart in a circumferential direction. In such developments, an even distribution of the clamping force and/or positively locking fixation is achieved. In other developments, bolt clusters of at least two bolts are proposed that are equally distanced from its circumferentially neighboring bolt clusters.

A preferred development suggests that the screw flange connection comprises at least one bushing, adapted to define a clearance gap between two flange collars. In particular, the at least one bushing is adapted to define a clearance gap between two further flange collars, namely between a first further flange collar and a second further flange collar, and/or between the further flange collar and the service flange collar. The bushing is preferably a hollow cylindrical element or any other spacer element adapted to define an axial distance between any two flange collars. In such developments, advantageously only one nut is needed for defining a clearance gap. Also, a bushing can be provided at a predetermined length in order to achieve a predetermined clamping force when the nut on each bolt is fastened. Preferably, one bushing is assigned to each bolt of the screw flange connection.

In a second aspect of the invention, a vehicle, in particular commercial vehicle, is proposed, comprising a pneumatic braking system with at least one brake actuator according to one of the first aspect of the invention.

In a third aspect of the invention, a method for assembling a brake actuator, preferably a brake actuator according to the first aspect of the invention, is proposed, comprising the steps: Provide at least one further housing of the brake actuator; Insert a plurality of bolts through holes of the at least one further flange collar; Assemble a diaphragm, preferably placing the diaphragm on a diaphragm support rim; Assemble a service brake housing by inserting a service flange collar of the service brake housing to the bolts; Apply a nut, preferably the third nut, to each bolt and fasten each nut until a desired clamping force is reached, preferably by using a torque wrench.

In a preferred development of the invention, it is proposed that the providing of the at least one further housing of the brake actuator comprises a providing of a first further housing and a second further housing, and that the method further comprises the steps: after the inserting of the plurality of bolts through holes of the at least one further flange collar: Apply a nut to the bolt, preferably apply a first nut and a second nut to each bolt without fastening; and after applying a third nut to each bolt and fastening said third nut: Fasten the first nut towards the bolt head and/or fasten the second nut towards the third nut, preferably until a desired counter force is reached, more preferably by using a torque wrench.

It shall be understood that the brake actuator according to the first aspect of the invention, the vehicle according to the second aspect of the invention and the method according to the third aspect of the invention comprise identical or similar developments, in particular as described in the dependent claims. Therefore, a development of one aspect of the invention is also applicable to another aspect of the invention.

These and other aspects of the invention will be apparent from and elucidated with reference to the embodiments described hereinafter. The embodiments of the invention are described in the following on the basis of the drawings in comparison with the state of the art, which is also partly illustrated. The latter is not necessarily intended to represent the embodiments to scale. Drawings are, where useful for explanation, shown in schematized and/or slightly distorted form. With regard to additions to the lessons immediately recognizable from the drawings, reference is made to the relevant state of the art. It should be borne in mind that numerous modifications and changes can be made to the form and detail of an embodiment without deviating from the general idea of the invention. The features of the invention disclosed in the description, in the drawings and in the claims may be essential for the further development of the invention, either individually or in any combination.

In addition, all combinations of at least two of the features disclosed in the description, drawings and/or claims fall within the scope of the invention. The general idea of the invention is not limited to the exact form or detail of the preferred embodiment shown and described below or to an object which would be limited in comparison to the object claimed in the claims. For specified design ranges, values within the specified limits are also disclosed as limit values and thus arbitrarily applicable and claimable.

Further advantages, features and details of the invention result from the following description of the preferred embodiments as well as from the drawings, which show in:
- FIG. 1: a illustration of a brake actuator according to prior art,
- FIG. 2: an illustration of a first preferred embodiment of a brake actuator according to the concept of the invention,
- FIG. 3: a detail view of a second preferred embodiment of a brake actuator according to the concept of the invention,
- FIG. 4: an exploded view of an excerpt of the first preferred embodiment,
- FIG. 5: a further view of the first preferred embodiment from another perspective,
- FIG. 6: preferred embodiment of a method for assembling a brake actuator,
- FIG. 7: a vehicle comprising brake actuators according to the concept of the invention.

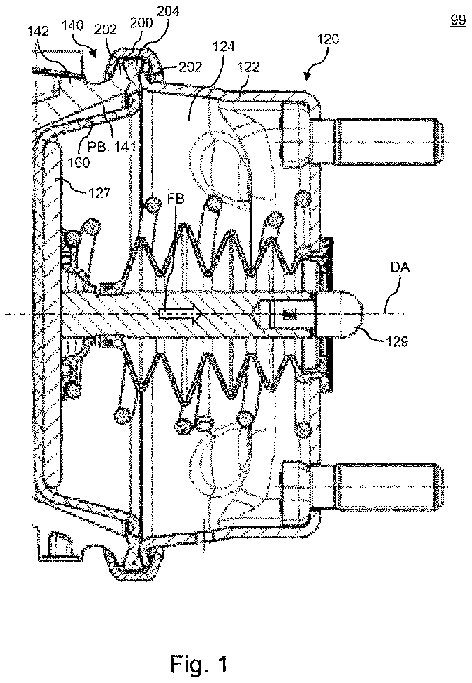

FIG. 1 shows a brake actuator 99 according to prior art. The brake actuator 99 comprises a service brake section 120 with a service brake housing 122, which is attached to a further housing 142 of a further section 140 by means of a clamping ring 200. The service brake housing 122 comprises a service brake non-pressure chamber 124. The service brake housing 122 as well as the further housing 142 each comprise a circumferential protrusion 202 adapted to accommodate a diaphragm 160 in an axial space between both circumferential protrusions 202. The diaphragm 160 comprises a support bead 204 that protrudes circumferentially on the diaphragm 160. The cross section of the support bead 204 is such that, in addition to the frictional connection resulting from a clamping force FC, a positive locking is established between the support bead 204 and the circumferential protrusions 202. The positive locking can be of an elastic kind, meaning that, due to at least partly elastic properties of the support bead, the positive locking is not of an absolute nature, however, the connection is significantly improved compared to a diaphragm without a support bead that relies solely on a frictional connection.

Said circumferential protrusions 202 are bent backwards in an axial direction with respect to an actuation direction DA in order to clamp the diaphragm 160 and also to engage with the clamping ring 200. Because of this, the circumferential protrusions 202 do not provide an even surface in a plane perpendicular to the actuation direction DA.

The diaphragm 160 is attached to a brake piston 127 in order to convert a brake pressure PB into an axial brake force FP. The brake force FP is transferred for braking purposes via a pressure bar 129, which is fixed to the brake piston 127.

The diaphragm 160 is hermetically attached to the further housing 142, forming a service brake pressure chamber 141. The service brake pressure chamber 141 is adapted to receive the brake pressure PB, which is then converted by the diaphragm 160 and the brake piston 127 to the brake force FP.

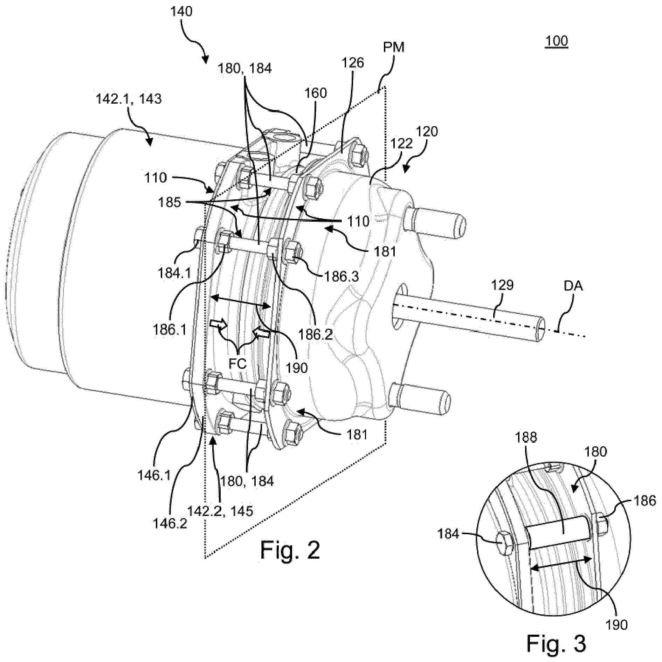

FIG. 2 illustrates a first preferred embodiment of a brake actuator 100 according to the concept of the invention. A service brake section 120 comprises a service brake housing 122. A further section 140 comprises a first further housing 142.1 in the form of a spring brake housing 143 encasing a spring brake chamber 144. The further section 140 further comprises a second further housing 142.2 in the form of a diaphragm support portion 145. The housings 122, 142.1, 142.2 are arranged in an axial sequence, i.e. along an actuation direction DA of the brake actuator 100.

The housings 122, 142.1, 142.2 are mounted together by means of a screw flange connection 180. The screw flange connection 180 comprises a plurality of bolts 184.

On the axial end of the service brake housing 122 facing the further section 140, the service brake housing 122 comprises a radially protruding service flange collar 126, which is protruding practically parallel to a mounting plane PM, therefore providing a substantially even mounting surface 110 at least in the area of the bolts 184. The mounting plane PM is substantially perpendicular to the actuation direction DA. Analogously, the first further housing 142.1 comprises a first further flange collar 146.1, and the second further housing 142.2 comprises a second further flange collar 146.2, wherein the first and second further flange collars 146.1, 146.2 protrude radially and practically parallel to the mounting plane PM and provide substantially even mounting surfaces 110 at least in the area of the bolts 184.

The screw flange connection 180 is established by fixing at least two of the flange collars 126, 146.1, 146.2 to each other, here the service flange collar 126, the first further flange collar 146.1 and the second further flange collar 146.2, by means of bolts 184. The bolts 184 are arranged circumferentially around the flange collars 126, 146.1, 146.2. In the embodiment shown, a total of eight bolts 184 is arranged in four clusters 181 of two bolts 184 each, wherein the clusters 181 our a distanced equally from each other around the circumference of the flange collars 126, 146.1, 146.2.

The school flange connection 180 further comprises a plurality of three nuts for each bolt 184, namely a first nut 186.1, a second nut 186.2 and the third nut 186.3. The first nut 186.1 is arranged so as to fix the first further flange collar 146.1 to the second further flange collar 146.2 by pressing the two further flange collars 146.1, 146.2 against a bolt head 184.1 of the bolt 184. The second nut 186.2 and third nut 186.3 are arranged on the bolt 184 so as to fix the service flange collar 126 at a defined distance, namely a clearance gap 190, with respect to the further flange collars 146.1, 146.2, here in particular the second further flange collar 146.2. The clearance gap 190 is chosen sufficiently small so that an axial clamping force FC results between the flange collars, in particular the first further flange collar 146.1 and the service flange collar 126. Said clamping force FC is transferred to the second further housing 142.2, i.e. the diaphragm support portion 145, and the service brake housing 122 in order to sealingly clamp the diapghragm 160 in between. As a consequence, a hermetically closed service brake pressure chamber 141 is formed between the diaphragm support portion 145 and the diaphragm 160.

In FIG. 3, an excerpt of a second preferred embodiment of a brake actuator 100 is shown, with a detail illustrating a bolt 184 of the screw flange connection 180. In the embodiments shown, only one nut 186 is used with each bolt 184, wherein the clearance gap 190 is achieved by using a bushing 188 with a defined axial length.

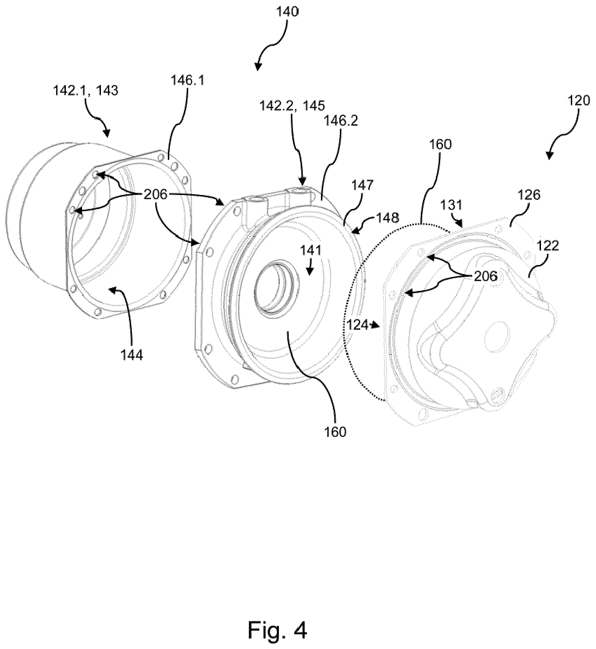

In FIG. 4, an exploded view of the housing components of the first embodiment is shown in an exploded view. Namely, the first further housing 142.1, in the form of a spring brake housing 143 encasing the spring brake chamber 144, the second further housing 146.2 in the form of a diaphragm support portion 145 and the service brake housing 122 is shown. The diaphragm 160 is indicated schematically in its axial position between the diaphragm support portion 145 and the service brake housing 122, separating the service brake non-pressure chamber 124 and the service brake pressure chamber 141. The diaphragm support portion 145 comprises a diaphragm support rim 147. The diaphragm support rim 147 protrudes axially towards the service brake housing 122 and defines an annular clamping area 148, adapted to apply the clamping force FC to the diaphragm 160 and thus sealingly press the diaphragm 160 against the service brake housing 122 for forming the service brake pressure chamber 141. In embodiments, the service brake housing 122 can comprise a service side support rim 131 (not visible here) in the form of an annular, axial protrusion extending towards the diaphragm support rim 147. In particular, the service side support rim 131 is of same or similar shape as the diaphragm support rim 147, with an axially opposing orientation. Also, holes 206 in the flange collars 126, 146.1, 146.2 are exemplarily indicated.

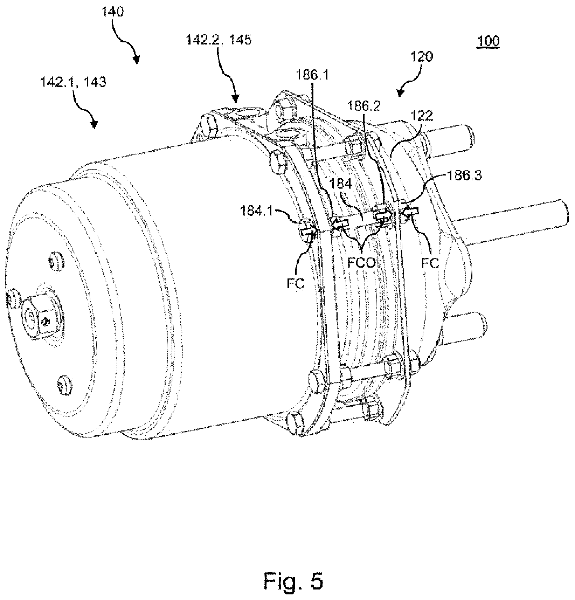

FIG. 5 shows a further view of the first preferred embodiment from another perspective, exemplarily indicating for one bolt 184 the clamping force FC acting between a bolt head 184.1 and a third nut 186.3. Further, one counter force FCO is indicated resulting from a fastening of a first nut 186.1 against the bolt head 184.1 and another counter force FCO is indicated resulting from a fastening of a second nut 186.1 against the third nut 186.3.

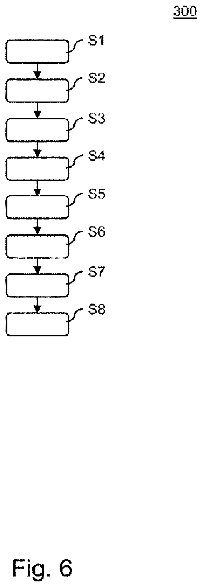

The reference to FIG. 6, a preferred embodiment of a method 300 for assembling a brake actuator 100 according to the concept of the invention is illustrated. The method of assembling a brake actuator includes the following steps:
Step S1: Assemble inner components of at least one further housing, in particular spring brake components.
Step S2: Provide the at least one further housing 142, preferably arrange and align a first further housing 142.1 and a second further housing 142.2.
Step S3: Insert a plurality of bolts 184 through holes 206 of the further flange collar 146, in particular of the first further flange collar 146.1 and of the second further flange collar 146.2.
Step S4: Apply a nut 186 to the bolt 184, preferably apply a first nut 186.1 and a second nut 186.2 to each bolt 184 without fastening. Preferably, turn the second nut 186.2 to a position further towards the first nut 186.1, in particular compared to its end position, resulting temporarily in a distance smaller than the clearance gap 190.
Step S5: Assemble the diaphragm 160, preferably placing the diaphragm 160 on a diaphragm support rim 147, and preferably assemble inner components of the service brake housing 122.
Step S6: Assemble a service brake housing 122 by inserting the service flange collar 126 to the bolts 184.
Step S7: Apply a nut 186, preferably the third nut 186.3 to each bolt 184 and fasten each third nut 186.3 until a desired clamping force FC is reached, preferably by using a torque wrench.
Step S8: Fasten the first nut 186.1 towards the bolt head 184.1 and/or fasten the second nut 186.2 towards the third nut 186.3, preferably until a desired counter force FC is reached. Preferably, the first nut 186.1 and/or the second nut 186.2 act as counter nuts in the screw flange connection 180. If applicable, other steps can be added or omitted, or the sequence of the steps can be altered.

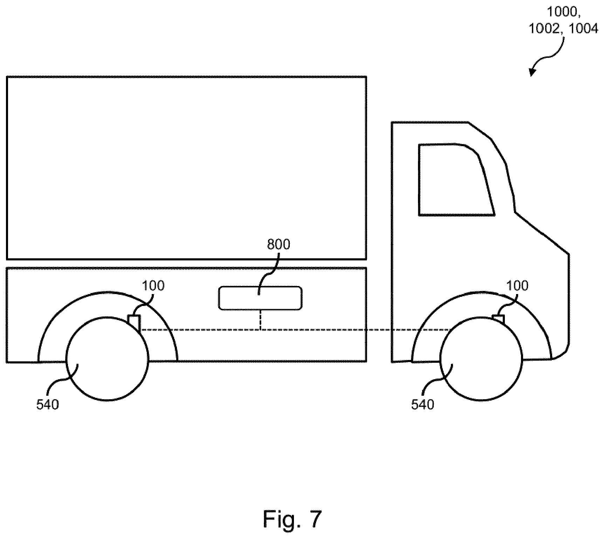

FIG. 7 shows a vehicle 1000 in the form of a commercial vehicle 1002. In other embodiments, the vehicle 1000 can be of a different type, such as a passenger vehicle 1004. The vehicle 1000 comprises a pneumatic brake system 800 with a plurality of the brake actuators 100 according to the concept of the invention. The vehicle 1000 comprises a total of four wheels 540, wherein one brake actuator 100 is assigned to each wheel 540.

### List of reference signs (Part of the description)

- 99: brake actuator according to prior art
- 100: brake actuator according to the concept of the invention
- 110: mounting surface
- 120: service brake section
- 122: service brake housing
- 124: service brake non-pressure chamber
- 126: service flange collar
- 127: brake piston
- 129: pressure bar
- 131: service side support rim
- 140: further section
- 141: service brake pressure chamber
- 142: further housing
- 142.1: first further housing
- 142.2: second further housing
- 143: spring brake housing
- 144: spring brake chamber
- 145: diaphragm support portion
- 146: further flange collar
- 146.1: first further flange collar
- 146.2: second further flange collar
- 147: diaphragm support rim
- 148: annular clamping area
- 160: diaphragm
- 180: screw flange connection
- 181: cluster of bolts
- 184: bolt
- 184.1: bolt head
- 186: nut
- 186.1: first nut
- 186.2: second nut
- 186.3: third nut
- 188: bushing
- 190: clearance gap
- 200: clamping ring
- 202: circumferential protrusion
- 204: support bead
- 206: hole
- 300: method
- 540: wheel
- 800: pneumatic brake system
- 1000: vehicle
- 1002: commercial vehicle
- 1004: passenger vehicle
- DA: actuation direction
- FC: clamping force
- FCO: counter force
- FP: axial brake force
- PB: brake pressure
- PM: mounting plane
- S1-S8: first to eighth step

## Claims

**1.** Brake actuator (100) for a vehicle (1002), in particular a commercial vehicle (1002), wherein the brake actuator (100) comprises:
- a service brake section (120) comprising a service brake housing (122) with a service brake non-pressure chamber (124),
- a further section (140), comprising at least one further housing (142) with a service brake pressure chamber (141), and
- a diaphragm (160), arranged and adapted to hermetically close the service brake pressure chamber (141),
**characterized in that**
- the service brake housing (122) comprises a service flange collar (126), and the at least one further housing (142) comprises a further flange collar (146), wherein
- the service flange collar (126) is mounted to the further flange collar (146) by a screw flange connection (180) with a plurality of bolts (184), such that
- the diaphragm (160) is held in between the service brake housing (122) and the at least one further housing (142).

**2.** Brake actuator (100) according to claim 1, **characterized in that**
- the further housing (142) is a spring brake housing (143), encasing a spring brake chamber (144).

**3.** Brake actuator (100) according to claim 1 or 2, **characterized in that**
- the further section (140) comprises a first further housing (142.1) and a second further housing (142.2), wherein
- the first further housing (142.1) comprises a first further flange collar (146.1), and preferably
- the second further housing (142.2) comprises a second further flange collar (146.2), wherein
- the first further flange collar (146.1) and/or the second further flange collar (146.2) are mounted to the service flange collar (126) by the screw flange connection (180).

**4.** Brake actuator (100) according to claim 3, **characterized in that**
- the first further housing (142.1) is a spring brake housing (143), encasing a spring brake chamber (144) and/or the second further housing (142.2) is a diaphragm support portion (145), wherein
- the diaphragm (160) is held in between the service brake housing (122) and the diaphragm support portion (145).

**5.** Brake actuator (100) according to claim 3 or 4, **characterized in that**
- the screw flange connection (180) comprises a plurality of nuts (186) for each bolt (184), preferably a first nut (186.1), a second nut (186.2) and a third nut (186.3), wherein the nuts (186) are adapted to engage with the bolt (184), wherein more preferably
- the first nut (186.1) is adapted to fix the first further flange collar (146.1) to the second further flange collar (146.2), and
- the service flange collar (126) is held in between the second nut (186.2) and the third nut (186.3).

**5.** Brake actuator (100) according to one of the preceding claims, **characterized in that**
- the further housing (142), preferably the diaphragm support portion (145), comprises a circular diaphragm support rim (147) protruding axially towards the service brake housing (122), adapted to press the diaphragm (160) against the service brake housing (122) with an annular clamping area (148).

**6.** Brake actuator (100) according to one of the preceding claims, **characterized in that**
- the screw flange connection (180) comprises a number of at least two bolts (184), preferably four bolts (184), more preferably eight bolts (184).

**7.** Brake actuator (100) according to one of the preceding claims, **characterized in that**
- the at least two bolts (184) are arranged circumferentially around the further flange collar (146), wherein preferably each bolt (180) is equally distanced from its circumferentially neighboring bolt (180), or bolt clusters (181) of at least two bolts (180) are equally distanced from its circumferentially neighboring bolt clusters (181).

**8.** Brake actuator (100) according to one of the preceding claims, **characterized in that**
- the screw flange connection (180) comprises at least one bushing (188), adapted to define a clearance gap (190) between two further flange collars (146, 146.1, 146.2), and/or between the further flange collar (146, 146.1, 146.2) and the service flange collar (126).

**9.** Vehicle (1000), in particular commercial vehicle (1002), comprising a pneumatic braking system (800) with at least one brake actuator (100) according to one of the preceding claims.

**10.** Method (300) for assembling a brake actuator (100), preferably a brake actuator (100) according to one of the claims 1 to 8, comprising the steps:
- Provide (S2) at least one further housing (142, 142.1, 142.2) of the brake actuator (100),
- Insert (S3) a plurality of bolts (184) through holes (206) of the at least one further flange collar (146, 146.1, 146.2),
- Assemble (S5) a diaphragm (160), preferably placing the diaphragm (160) on a diaphragm support rim (147),
- Assemble (S6) a service brake housing (122) by inserting a service flange collar (126) of the service brake housing (122) to the bolts (184),
- Apply (S7) a nut (186), preferably the third nut (186.3), to each bolt (184) and fasten each nut (186) until a desired clamping force (FC) is reached, preferably by using a torque wrench.

**11.** Method (300) according to claim 10, **characterized in that**
- the providing (S2) of the at least one further housing (142, 142.1, 142.2) of the brake actuator (100) comprises a providing of a first further housing (142.1) and a second further housing (142.2), and that the method (300) further comprises the steps:
- after the inserting (S3) of the plurality of bolts (184) through holes (206) of the at least one further flange collar (146, 146.1, 146.2): Apply a nut (186) to the bolt (184), preferably apply a first nut (186.1) and a second nut (186.2) to each bolt (184) without fastening, and
- after applying (S7) a third nut (186.3) to each bolt (184) and fastening said third nut (186.3): Fasten the first nut (186.1) towards the bolt head (184.1) and/or fasten the second nut (186.2) towards the third nut (186.3), preferably until a desired counter force (FCO) is reached, more preferably by using a torque wrench.
